# FASCICULE DE BREVET EUROPEEN

(11) **EP 1 336 330 B1**
(45) Date de publication et mention de la délivrance du brevet: **06.06.2007**
(21) Numéro de dépôt: 03360021.4
(22) Date de dépôt: 06.02.2003
(51) Int. Cl.: A01B 49/06, A01C 7/20

(54) **Semoir**
Sämaschine
Sowing machine

(30) Priorité: 14.02.2002 FR 0201856
(43) Date de publication de la demande: 20.08.2003
(73) Titulaire: Kuhn-Huard S.A., 44142 Chateaubriant Cedex (FR)
(72) Inventeur: Sechet, Arnaud, 49450 Villedieu la Blouere (FR); Gentilhomme, Guy, 44110 Louisfert (FR)
(74) Mandataire: Andres, Jean-Claude

(56) Documents cités:
- EP-A- 0 928 553
- DE-A- 19 633 119
- FR-A- 2 662 904
- US-A- 4 977 841

## Description

La présente invention se rapporte au domaine technique générale du machinisme agricole. Elle concerne une machine agricole semi-portée et plus particulièrement un semoir comportant:
- un timon d'attelage destiné à être lié à un tracteur,
- un corps comportant
   * un châssis composé :
      - d'un châssis avant lié audit timon d'attelage s'appuyant sur le sol au moyen de roues qui y sont liées au moyen d'organes de liaison de manière à pouvoir être déplacées en hauteur, et
      - d'un châssis arrière lié au châssis avant au moyen d'une articulation centrale d'axe longitudinal au moins sensiblement vertical, ledit châssis arrière porte au moins un rouleau de rappui,
      et
   * un dispositif de semis comportant entre autres une trémie et des organes d'implantation de graines dans le sol, lesdits organes d'implantation étant portés par le châssis arrière.

Une telle machine agricole est connue par l'homme de l'art. En effet, la société Kuhn S.A fabrique et commercialise un tel semoir, le **"Fastliner Série 1000".** Cette machine comporte d'une part, un timon d'attelage et un châssis avant soutenu par des roues. Ledit châssis avant porte également des outils ouvreurs. Ladite machine comporte d'autre part, un châssis arrière lié audit châssis avant à l'aide d'une articulation centrale. Ledit châssis arrière porte des éléments semeurs. Ledit châssis arrière comporte aussi des rouleaux de rappuyage implantés devant lesdits éléments semeurs et derrière lesdites roues soutenant le châssis avant. Lesdits rouleaux sont disposés sur toute la largeur de travail dudit semoir afin de presser le sol. Lesdits rouleaux combinés aux roues de soutien du châssis avant contribuent à la préparation d'un lit de semence optimal grâce à un effet d'émiettement et de tassement du lit de semence. Les roues de l'appareil sont donc utiles dans la configuration de transport comme dans la configuration de travail.

Lors de l'utilisation de ce semoir connu au travail et particulièrement au cours de manoeuvres, les outils ouvreurs, les éléments semeurs et les rouleaux de rappuyage sont relevés afin de pouvoir effectuer un demi-tour dans de bonnes conditions. Dans cette configuration, le semoir est appuyé sur ses roues. Ces dernières supportant une grande partie du poids du semoir, s'enfoncent et tassent le sol plus en profondeur. Le tassement du lit de semence n'est donc pas uniforme et entraîne une levée irrégulière de la semence dans le champ. Ce phénomène est surtout présent en bout de champ.

Le but de la présente invention vise à remédier à cet inconvénient de l'état de la technique.

A cet effet, le semoir selon la présente invention est caractérisé par le fait que ledit semoir comporte de plus un rouleau central permettant d'accompagner sur le sol lesdites roues lors de manoeuvres. La pression exercée par lesdites roues de l'appareil sur le sol est diminuée et par conséquent le rappuyage du lit de semence en bout de champ est moins important.

Selon une autre caractéristique de l'invention, ledit rouleau central peut être dégagé de sa position de travail en pivotant autour d'au moins une articulation.

Selon une caractéristique supplémentaire de l'invention, la pression exercée sur le sol par ledit rouleau central est avantageusement réglable au moyen d'au moins un vérin.

D'autres caractéristiques de l'invention, à considérer séparément ou dans toutes leurs combinaisons possibles, apparaîtront encore dans les sous-revendications et dans la description suivante de quelques exemples de réalisation non limitatif de l'invention représenté sur les dessins annexés sur lesquels :
- la **figure 1** représente, selon une première forme de réalisation une vue de profil globale d'un semoir conforme à l'invention s'étendant dans une position qui correspond à la position de travail,
- la **figure 2** représente le semoir de la figure 1 vu de profil, s'étendant dans une position qui correspond à la position transport,
- la **figure 3** représente le semoir de la figure 1 vu de profil, s'étendant dans une position qui correspond à la position de bout de champ lors de manoeuvres,
- la **figure 4** représente une vue de dessus du semoir de la figure 1,
- la **figure 5** représente un agrandissement selon la figure 3 de la partie au voisinage des roues du semoir,
- la **figure 6** représente selon une deuxième forme de réalisation vue de profil, un semoir selon l'invention s'étendant dans une position qui correspond à la position de travail,
- la **figure 7** représente le semoir de la figure 6 vu de profil, s'étendant dans une position qui correspond à la position transport,
- la **figure 8** représente le semoir de la figure 6 vu de profil, s'étendant dans une position qui correspond à la position de bout de champ lors de manoeuvres,
- la **figure 9** représente un agrandissement selon la figure 8 de la partie au voisinage des roues du semoir,
- la **figure 10** représente selon une troisième forme de réalisation et à une autre échelle la partie au voisinage des roues du semoir,
- la **figure 11** représente selon une quatrième forme de réalisation et à une autre échelle la partie au voisinage des roues du semoir.

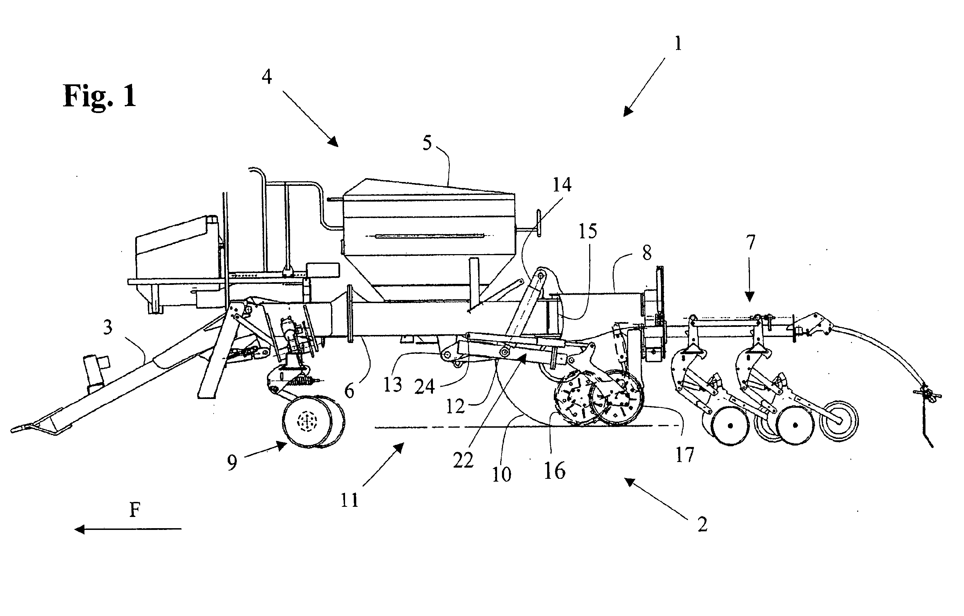

La figure 1 représente, en vue de profil, un semoir (1) conforme à la présente invention. Lors du travail et du transport, ledit semoir (1) est déplacé suivant une direction et un sens d'avance indiqué par la flèche (F). Dans la suite de la description, les notions suivantes "avant" et "arrière", "devant" et "derrière" sont définies par rapport au sens d'avance (F) et les notions "droite" et "gauche" sont définies en regardant ledit semoir (1) de l'arrière dans le sens d'avance (F).

D'une manière connue de l'homme de l'art, ledit semoir (1) comporte un corps (2) lié à l'arrière d'un tracteur (non représenté) au moyen d'un timon d'attelage (3). A son tour, ledit corps (2) comporte un dispositif de semis (4) porté par un châssis. Plus précisément, dans l'exemple de réalisation représenté sur les figures 1 à 3, ledit dispositif de semis (4) se compose notamment d'une trémie (5) liée à un châssis avant (6), et d'organes d'implantation des graines dans le sol (7) supportés par un châssis arrière (8).

Ledit semoir (1) représenté sur les figures permet, d'une manière particulièrement avantageuse, de préparer et d'ensemencer une bande de terre sur un sol non travaillé ou sur un sol préalablement travaillé. Ledit châssis avant (6) du semoir (1) porte donc des outils (9) préparant le lit de semence.

Lorsque le semoir (1) est utilisé sur un sol sans aucune préparation, il est avantageux de pourvoir ledit châssis avant (6) avec des disques ouvreurs disposés devant lesdits organes d'implantation (7) afin de travailler la terre sur une bande étroite. Lesdits disques ouvreurs sont disposés suivant une ligne au moins sensiblement horizontale et perpendiculaire à ladite direction d'avance (F). Par ailleurs, lesdits disques ouvreurs sont répartis de manière au moins sensiblement uniforme sur toute la largeur de travail dudit semoir (1). Par contre sur un sol déchaumé, il sera judicieux de pourvoir le châssis avant (6) d'une rangée de lames niveleuses et d'une rangée de disques à forte ondulation afin de niveler et de foisonner la terre sur toute la largeur du semoir (1).

D'une manière également connue de l'homme de fart, ledit châssis avant (6) s'appuie au moins partiellement sur le sol au moyen de deux roues (10). Lesdites roues (10) sont liées audit châssis avant (6), avantageusement de manière à pouvoir être déplacées en hauteur, au moyen d'organes de liaison (11). Lesdites roues (10) sont utilisées au travail comme au transport et tournent autour d'un axe de rotation sensiblement horizontal et orthogonal à la direction d'avance (F). Dans l'exemple de réalisation représenté sur les figures, lesdits organes de liaison (11) se composent notamment d'un chariot porteur (12) lié audit châssis avant (6) au moyen d'au moins une deuxième articulation (13) d'axe au moins sensiblement horizontal et orthogonal à ladite direction d'avance (F). Ledit châssis avant (6) comporte avantageusement deux deuxièmes articulations (13) disposées de part et d'autre de l'axe central dudit semoir (1). Ledit chariot porteur (12) est pivoté autour desdites deuxièmes articulations (13) au moyen de deux vérins de relevage (14). Ainsi, par pivotement dudit chariot porteur (12) autour desdites deuxièmes articulations (13), lesdites roues (10) peuvent être éloignées ou rapprochées dudit châssis avant (6). Ledit semoir (1) peut ainsi être abaissé pour le travail ou soulevé pour le transport. D'une manière préférentielle, ledit semoir (1) comporte également un dispositif de réglage définissant l'abaissement maximal dudit semoir (1). La profondeur de travail desdits outils (9) peut donc aisément être réglée.

Dans l'exemple de réalisation représenté sur les figures 1 à 4, l'avant dudit châssis arrière (8) est lié à l'arrière dudit châssis avant (6) au moyen d'une articulation centrale (15) d'axe au moins sensiblement vertical. Ladite articulation centrale (15) est avantageusement comprise dans un plan vertical médian dudit châssis avant (6). De manière préférentielle, ladite articulation centrale (15) est également disposée sensiblement à mi-distance entre lesdits outils (9) et lesdits organes d'implantation de graines dans le sol (7). Ainsi lorsque ledit semoir (1) effectue un virage ou contourne un obstacle, ladite articulation centrale (15) permet à chaque organe d'implantation de graines dans le sol (7) de bien rester dans le sillon créé par l'outil (9) correspondant.

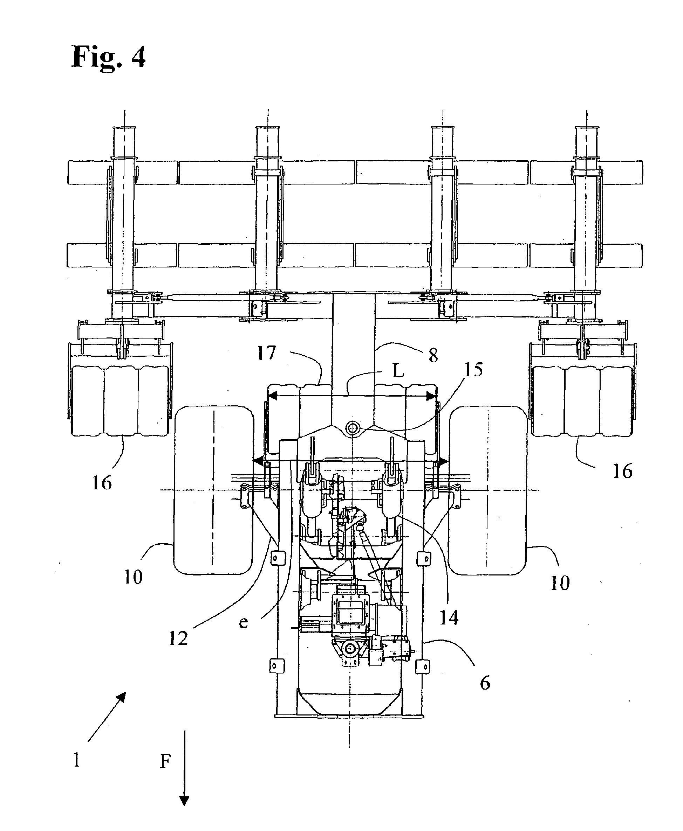

L'utilisation du semoir (1) sur un sol légèrement déchaumé ou labouré nécessite le rappuyage de la terre sur toute la largeur de travail afin d'obtenir un lit de semence optimal. L'emploi de rouleaux de rappui devant lesdits organes d'implantation (7) permet d'émietter et tasser le lit de semence. Selon la figure 1, ledit semoir (1) comporte des rouleaux de rappui combinés aux roues (10) afin de rappuyer la terre sur toute la largeur de travail. Lesdits rouleaux de rappui sont disposés, d'une manière préférentielle, entre les outils (9) et les organes d'implantation de graines dans le sol (7). A la lumière de la figure 4, des rouleaux d'extrémité (16) sont disposés de part et d'autre desdites roues (10) et sont destinés à tasser la terre à droite et à gauche desdites roues (10). Lesdits rouleaux d'extrémité (16) sont avantageusement liés audit châssis arrière (8). La pression de rappuyage au sol desdits rouleaux d'extrémité (16) est avantageusement réglable. Il est aussi possible d'écarter complètement lesdits rouleaux d'extrémité (16) de leur position de travail.

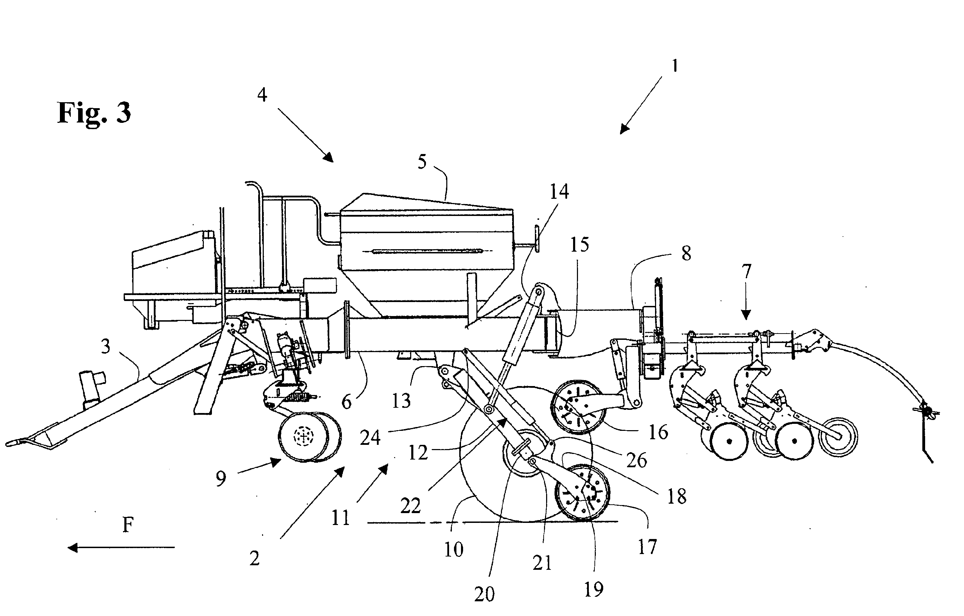

Selon une caractéristique importante de la présente invention, ledit semoir (1) comporte un rouleau central (17) accompagnant les roues (10) lors de manoeuvres. La largeur de travail restante entre lesdites roues (10) est, pour sa part, tasser par ledit rouleau central (17). Conformément à la figure 3, lorsque le semoir (1) passe de sa position de travail à sa position de manoeuvre, ledit chariot porteur (12) est pivoté autour desdites deuxièmes articulations (13) au moyen desdits vérins de relevage (14) et lesdites roues (10) s'éloignent du châssis avant (6). Le semoir (1) est dans sa position soulevée et lesdits outils (9), lesdits rouleaux d'extrémité (16) ainsi que les organes d'implantation (7) ne sont plus en contact avec le sol. Cette configuration est idéale pour procéder à un demi-tour dans de bonnes conditions. Le rouleau central (17) reste, quant à lui, appuyé sur le sol afin d'accompagner lesdites roues (10) pour effectuer la manoeuvre. La combinaison des roues (10) et du rouleau central (17) permet ainsi de réduire considérablement le tassement du lit de semence en bout de champ et d'obtenir un lit de semence plus homogène. Il est à noter que le tassement du sol est seulement nécessaire pour des terres préalablement travaillées.

D'une manière avantageuse et à la lumière de la figure 4, la largeur (L) dudit rouleau central (17) est sensiblement égale à l'entrepneu (e) des roues (10). Le rouleau central (17) est situé sensiblement derrière l'axe de rotation desdites roues (10). Ledit rouleau central (17) associé audits rouleaux d'extrémité (16) constituent ledit (au moins un desdits) rouleau(x) de rappui. Le rouleau central (17) complète avantageusement ledit (au moins un desdits) rouleau(x) de rappui, ainsi la lit de semence est idéalement tassé sur toute la largeur de travail du semoir (1). Ledit rouleau central (17) est lié audit châssis avant (6) au moyen de bras (18). Dans l'exemple de réalisation représenté sur les figures, ledit rouleau central (17) comporte avantageusement deux bras (18) disposées de part et d'autre dudit rouleau central (17). Chaque bras (18) est lié d'une part, audit rouleau central (17) au moyen d'une troisième articulation (19) d'axe sensiblement parallèle à l'axe de rotation dudit rouleau central (17). D'autre part, chaque bras (18) est aussi relié audit chariot porteur (12) et plus précisément à l'essieu (20) desdites roues (10) au moyen d'au moins une première articulation (21) d'axe au moins sensiblement horizontal et orthogonal à la direction d'avance (F). L'axe de ladite (au moins une desdites) première(s) articulation(s) (21) est avantageusement parallèle à l'axe desdites deuxièmes articulations (13).

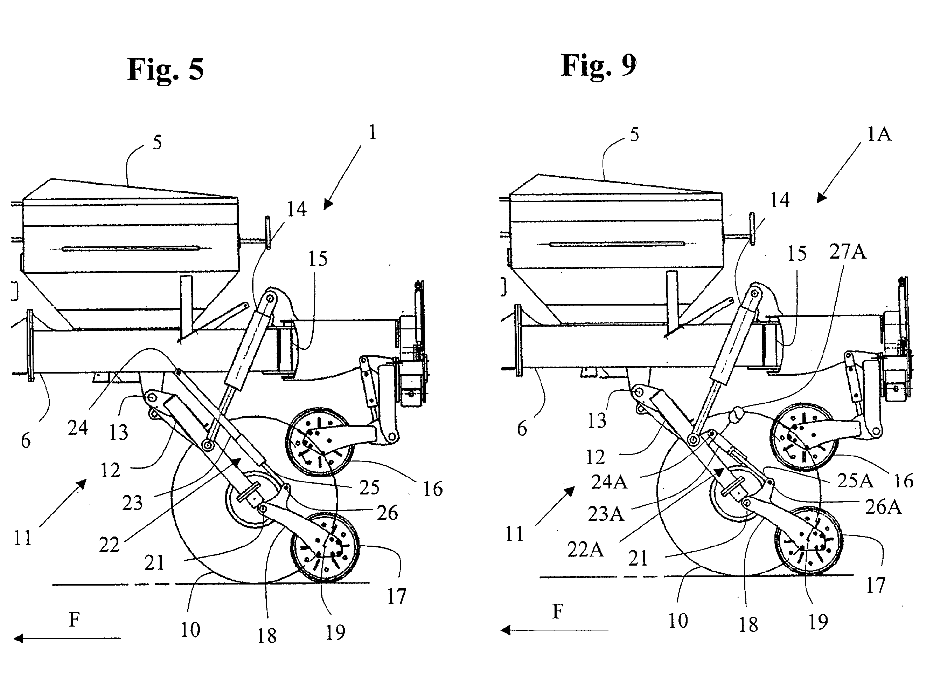

Dans l'exemple de réalisation représenté sur les figures et plus particulièrement sur la figure 5, chaque bras (18) est encore lié au châssis avant (6) au moyen d'un vérin (22). Chaque vérin (22) comporte un corps (23) lié audit châssis avant (6) au moyen d'une cinquième articulation (24) d'axe au moins sensiblement horizontal et orthogonal à la direction d'avance (F). L'axe de cette cinquième articulation (24) est avantageusement parallèle à l'axe desdites deuxièmes articulations (13). Chaque vérin (22) comporte également un piston (25) lié audit bras respectif (18) au moyen d'une quatrième articulation (26) d'axe au moins sensiblement horizontal et orthogonal à la direction d'avance (F). L'axe de cette cinquième articulation (26) est avantageusement parallèle à l'axe desdites deuxièmes articulations (13). Avantageusement, les axes desdites premières articulations (21), deuxièmes articulations (13), quatrièmes articulations (26) et cinquièmes articulations (24) forment sensiblement un parallélogramme lorsque ledit rouleau central (17) est en contact avec le sol.

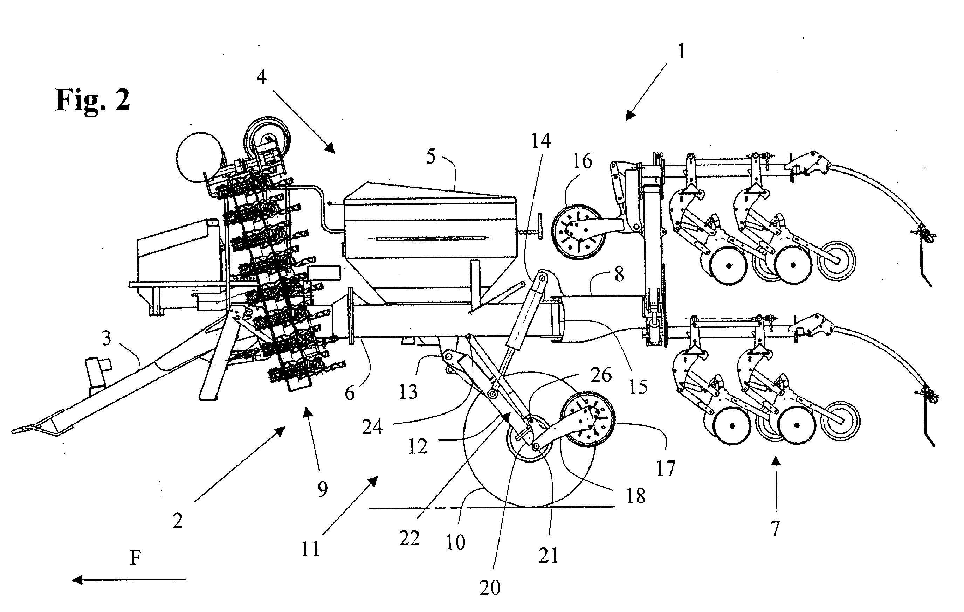

En actionnant lesdits vérins (22), on peut régler la pression au sol du rouleau central (17) et même le dégager de sa position de travail. Les vérins (22) sont placés de part et d'autre dudit rouleau central (17). D'une manière préférentielle lesdits vérins (22) sont des vérins à double effet. On notera que chaque longueur spécifique du vérin (22) correspond à une pression dudit rouleau central (17) exercée sur le sol. Ledit vérin (22) bénéficie avantageusement d'une commande hydraulique séparée par rapport à la commande desdits rouleaux d'extrémité (16). Lesdits vérins (22) permettent également de dégager ledit rouleau central (17) de sa position de travail. Ainsi lorsque les pistons (25) sont entièrement rentrés dans lesdits corps (23), les bras (18) soutenant ledit rouleau central (17) pivotent vers le haut autour desdites premières articulations (21). Ledit rouleau central (17) se trouve, par conséquent, dans sa position de transport comme visible sur la figure 2. Il est appréciable de pouvoir dégager ledit rouleau central (17) dans sa position de travail lorsque par exemple, ledit semoir (1) est employé sur un sol non travaillé qui ne sollicite donc pas de tassement du lit de semence.

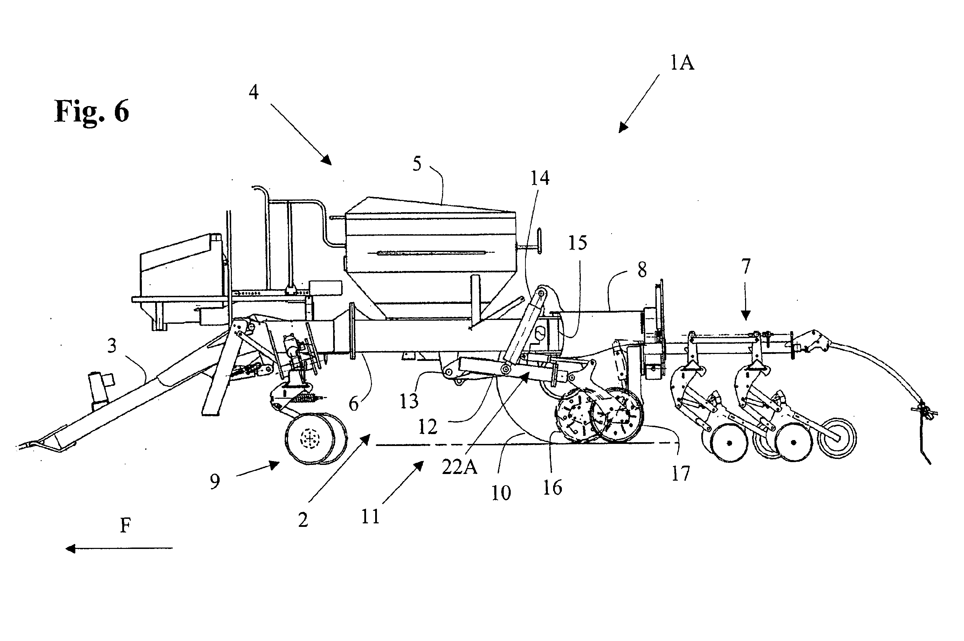

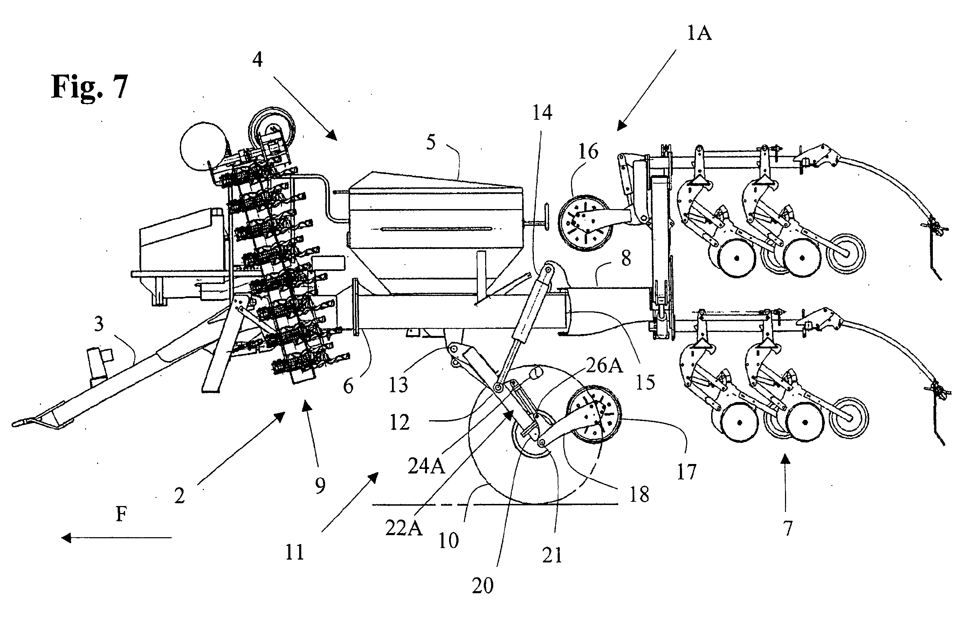

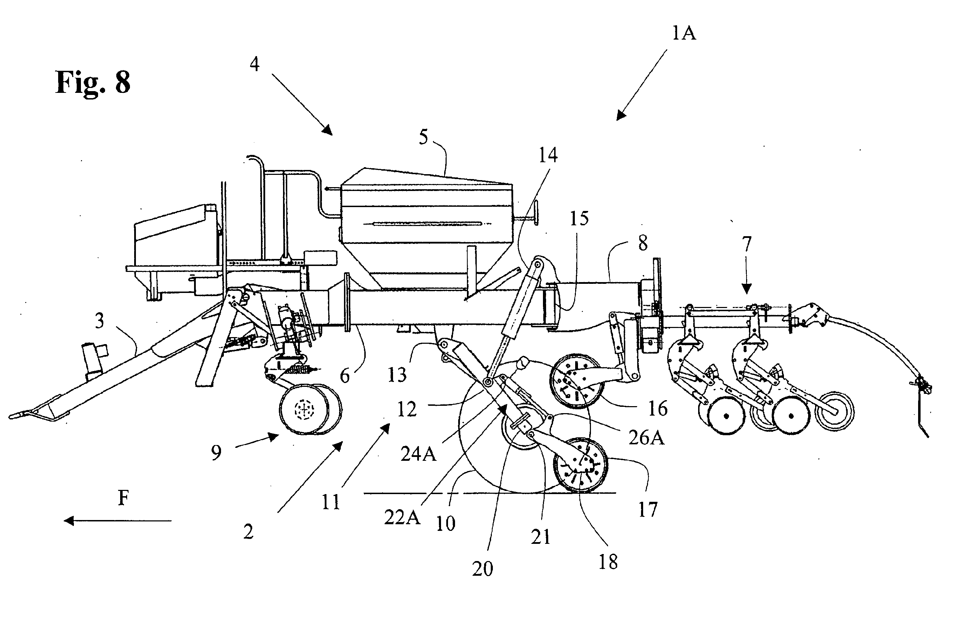

Les figures 6 à 9 représentent une deuxième forme de réalisation d'un semoir (1A) selon la présente invention. Ce semoir (1A) comporte un certain nombre d'éléments qui ont été décrits précédemment. Ces éléments garderont par conséquent le même numéro de repère et ne seront pas redécrits. Ledit semoir (1A) comporte également un certain nombre d'éléments qui sont comparables à des éléments du semoir (1) décrit précédemment. Ces éléments seront affectés du même numéro de repère que ces éléments comparables du semoir (1) suivi de la lettre A. Ils ne seront décrits que si cela s'avère nécessaire. Le semoir (1A) selon cette deuxième forme de réalisation est dans l'ensemble semblable au semoir (1) représenté sur la figure 1. Les seules différences résident dans le fait que chaque vérin (22A) est relié à une cinquième articulation respective (24A), qui est liée audit chariot porteur (12). De plus, chaque vérin (22A) est combiné à une liaison élastique.

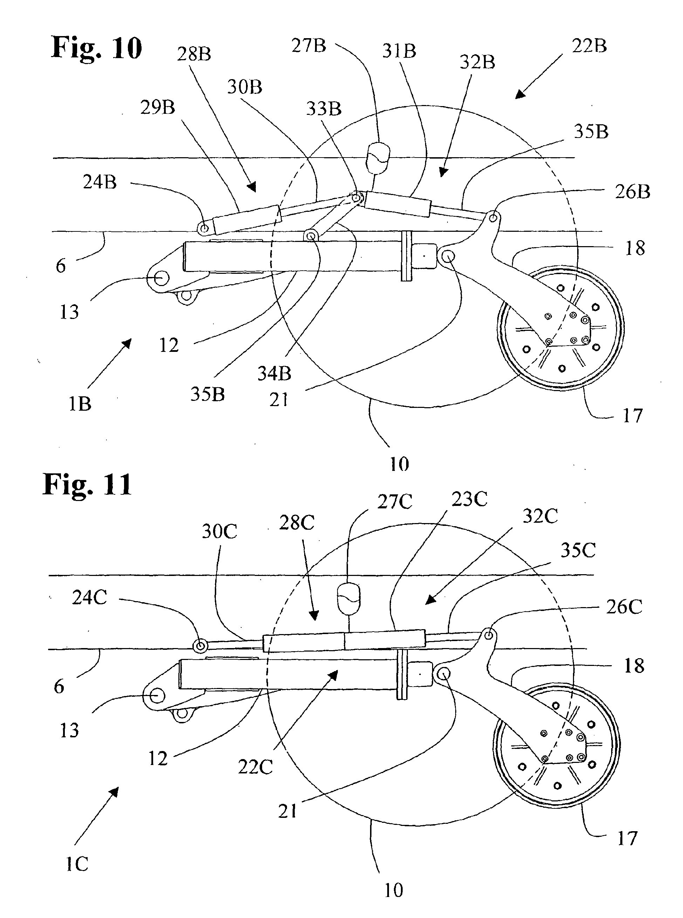

Selon l'exemple de réalisation représenté notamment sur la figure 9, lesdits bras (18) sont liés audit chariot porteur (12) au moyen de vérins (22A). Le corps (23A) de chaque vérin (22A) est lié audit chariot porteur (12) au moyen d'une cinquième articulation respective (24A) d'axe au moins sensiblement horizontal et orthogonal à la direction d'avance (F). Le piston (25A) de chaque vérin (22A) est, quant à lui, relié audit bras (18) au moyen d'une quatrième articulation correspondante (26A). Lesdits vérins (22A) permettent d'une part, le passage dudit rouleau central (17) d'une position de travail à une position de transport. Et d'autre part en agissant sur lesdits vérins (22A), on peut régler la pression au sol du rouleau central (17) et même le dégager de sa position de travail. Lesdits vérins (22A) sont donc avantageusement des vérins double effet. Le réglage de la pression exercée au sol par ledit rouleau central (17) est encore avantageusement réalisé par ledit vérin (22A) associé à un accumulateur de pression (27A). On notera que chaque pression de l'accumulateur (27A) correspond à une longueur spécifique du vérin (22A) et donc à une pression au sol dudit rouleau central (17). Cette liaison élastique permet d'absorber le mouvement relatif dudit rouleau central (17) par rapport audit châssis avant (6).

La figure 10 représente une troisième forme de réalisation d'un semoir (1B) conforme à la présente invention. Ce semoir (1B) comporte un certain nombre d'éléments qui ont été décrits précédemment. Ces éléments garderont par conséquent le même numéro de repère et ne seront pas redécrits. Ledit semoir (1B) comporte également un certain nombre d'éléments qui sont comparables à des éléments du semoir (1 ; 1A) décrit précédemment. Ces éléments seront affectés du même numéro de repère que ces éléments comparables du semoir (1) suivi de la lettre B. Ils ne seront décrits que si cela s'avère nécessaire. Le semoir (1B) selon cette troisième forme de réalisation est dans l'ensemble semblable au semoir (1) représenté sur la figure 1. Les seules différences résident dans le fait que le repliage dudit rouleau central (17) pour le transport et le réglage de la pression au sol sont réalisés par deux vérins indépendants.

Selon l'exemple de réalisation représenté sur la figure 10, chaque vérin (22) du semoir (1) est remplacé par un couple de vérins indépendants (22B). Un premier vérin (28B) permettant uniquement de réaliser le repliage dudit rouleau central (17) pour le transport, ce vérin (28B) est de préférence un vérin à double effet. Ledit premier vérin (28B) comporte un corps (29B) lié audit châssis avant (6) au moyen d'une cinquième articulation (24B) et un piston (30B) lié au corps (31B) d'un deuxième vérin (32B) par une sixième articulation (33B). Ladite sixième articulation (33B) est, pour sa part, liée audit chariot porteur (12) au moyen d'une bielle (34B). Ladite bielle (34B) est lié audit chariot porteur (12) au moyen d'une septième articulation (35B). Ledit deuxième vérin (32B) comporte un piston (35B) lié audit bras (18) au moyen d'une quatrième articulation (26B). Ledit deuxième vérin (32B) permet, quant à lui, le réglage de la pression au sol. Ledit deuxième vérin (32B) est de préférence du type simple effet dont une chambre est reliée à un accumulateur de pression (27B), mais ledit deuxième vérin (32B) pourrait également être un vérin du type double effet. On notera que chaque pression de l'accumulateur (27B) correspond à une longueur spécifique du vérin (32B) et donc à une pression au sol dudit rouleau central (17). Comme le repliage et le réglage de la pression au sol dudit rouleau central (17) sont réalisés par deux vérins indépendants (28B, 32B), il est ainsi particulièrement aisé de passer de la position de travail à la position de transport et vice versa sans modifier le réglage initial de la pression au sol dudit rouleau central (17).

La figure 11 représente une quatrième forme de réalisation d'un semoir (1C) conforme à la présente invention. Ce semoir (1C) comporte un certain nombre d'éléments qui ont été décrits précédemment. Ces éléments garderont par conséquent le même numéro de repère et ne seront pas redécrits. Ledit semoir (1C) comporte également un certain nombre d'éléments qui sont comparables à des éléments du semoir (1 ; 1A ; 1B) décrit précédemment. Ces éléments seront affectés du même numéro de repère que ces éléments comparables du semoir (1) suivi de la lettre C. Ils ne seront décrits que si cela s'avère nécessaire. Le semoir (1C) selon cette quatrième forme de réalisation est dans l'ensemble semblable au semoir (1B) représenté sur la figure 10. La seule différence réside dans le fait que le couple de vérins (22B) est remplacé par un vérin double (22C).

Selon l'exemple de réalisation représenté sur la figure 11, chaque couple de vérins (22B) du semoir (1B) est remplacé par un vérin double (22C). Ledit vérin double (22C) est constitué d'un corps commun (23C), d'un premier piston (30C) et d'un deuxième piston (35C). Ledit premier piston (30C) et ledit corps (23C) constitue un premier vérin (28C). Ledit premier piston (30C) est lié à la cinquième articulation (24C) et permet le repliage du rouleau central (17) pour le transport. Ledit deuxième piston (35C) et ledit corps (23C) constitue un deuxième vérin (32C). Ledit deuxième piston (35C) est lié audit bras (18) au moyen d'une quatrième articulation (26C). Ledit deuxième piston (31C) permet, pour sa part, le réglage de la pression exercée par ledit rouleau central (17) sur le sol. Le repliage dudit rouleau central (17) pour le transport est effectué avantageusement par ledit premier vérin (28C) qui est du type vérin à double effet. Tandis que le réglage de pression au sol est réalisé par ledit deuxième vérin (32C) qui peut être du type vérin à simple effet ou vérin à double effet, dont une chambre est reliée à un accumulateur de pression (27C). Comme le repliage dudit rouleau central (17) et le réglage de la pression au sol sont réalisés par deux vérins indépendants (28C, 32C), il est ainsi particulièrement aisé de passer de la position de travail à la position de transport sans modifier le réglage de la pression au sol dudit rouleau central (17). Il est aussi possible que ledit vérin double (22C) soit constitué par deux vérins indépendants (28C, 32C) dont le corps du premier vérin (28C) est lié rigidement au corps du deuxième vérin (32C) de façon à ne former qu'un seul corps (23C).

Finalement, différentes modifications restent possibles notamment en ce qui concerne la constitution des divers éléments ou par substitution d'équivalents techniques, ou encore par combinaison des différents exemples de réalisations représentés, sans pour autant sortir du domaine de protection défini dans les revendications.

C'est ainsi qu'il est tout à fait envisageable de remplacer les deux vérins (22 ; 22A ; 22B ; 22C) réalisant le réglage de la pression au sol et le repliage pour le transport par un seul vérin (22 ; 22A ; 22B ; 22C) situé avantageusement au voisinage de l'axe central du semoir.

Il est également possible de remplacer l'accumulateur de pression hydraulique (27A, 27B, 27C) permettant d'absorber le mouvement relatif dudit rouleau central (17) par rapport audit châssis avant (6) par un ressort.

Il est encore parfaitement possible de réaliser un rouleau central en plusieurs parties.

Il est aussi envisageable que ledit rouleau central (17) soit situé sensiblement devant l'axe de rotation desdites roues (10).

Il est aussi imaginable de remplacer le(ou les) vérin(s) (22 ; 22A ; 22B ; 22C) reliant les articulations (24 ; 24A ; 24B ; 24C) et (26 ; 26A ; 26B ; 26C) par un tirant ou encore par une combinaison d'un vérin hydraulique et d'un tirant.

## Revendications

1. Semoir (1 ; 1A ; 1B ; 1C) comportant :
- un timon d'attelage (3) destiné à être lié à un tracteur,
- un corps (2) comportant
* un châssis composé :
• d'un châssis avant (6) lié audit timon d'attelage (3) et s'appuyant sur le sol au moyen de roues (10) qui y sont liées au moyen d'organes de liaison (11) de manière à pouvoir être déplacées en hauteur, et
• d'un châssis arrière (8) lié audit châssis avant (6) au moyen d'une articulation centrale (15) d'axe au moins sensiblement vertical, ledit châssis arrière (8) porte au moins un rouleau de rappui (16),
et
* un dispositif de semis (4) comportant entre autres une trémie (5) et des organes d'implantation de graines dans le sol (7), lesdits organes d'implantation de graines dans le sol (7) étant portés par le châssis arrière (8),
***caractérisé par le fait que*** ledit semoir (1) comporte de plus un rouleau central (17) permettant d'accompagner sur le sol lesdites roues (10) lors de manoeuvres.

2. Semoir selon la revendication 1, ***caractérisé par le fait que*** ledit rouleau central (17) complète ledit(desdits) rouleau(x) de rappui.

3. Semoir selon la revendication 1 ou 2, ***caractérisé par le fait que*** ledit rouleau central (17) est situé sensiblement derrière l'axe de rotation desdites roues (10).

4. Semoir selon l'une quelconque des revendications 1 à 3, ***caractérisé par le fait que*** la largeur dudit rouleau central (17) est sensiblement égale à l'entrepneu (e) desdites roues (10).

5. Semoir selon l'une quelconque des revendications 1 à 4, ***caractérisé par le fait que*** ledit rouleau central (17) est dégagé de sa position de travail en pivotant autour d'au moins une première articulation (21).

6. Semoir selon l'une quelconque des revendications 1 à 5, ***caractérisé par le fait que*** ledit rouleau central (17) est lié à un chariot porteur (12) au moyen d'au moins un bras (18) et que ledit chariot porteur (12) est lié audit châssis avant (6) au moyen d'au moins une deuxième articulation (13).

7. Semoir selon la revendication 6 prise en combinaison avec la revendication *5, **caractérisé par le fait que*** ledit (au moins un desdits) bras (18) est(sont) lié(s) d'une part audit rouleau central (17) au moyen d'au moins une troisième articulation (19) et d'autre part audit chariot porteur (12) au moyen de ladite (au moins une desdites) première(s) articulation(s) (21).

8. Semoir selon la revendication 6 ou 7, ***caractérisé par le fait qu**'*au moins un vérin (22 ; 22B ; 22C) est implanté entre ledit (au moins un desdits) bras (18) et ledit châssis avant (6).

9. Semoir selon la revendication 8, ***caractérisé par le fait que*** ledit (au moins un desdits) vérin(s) (22; 22B; 22C) est(sont) lié(s) audit (à au moins un desdits) bras (18) au moyen d'au moins une quatrième articulation (26 ; 26B ; 26C).

10. Semoir selon la revendication 8 ou 9, ***caractérisé par le fait que*** la pression exercée par ledit rouleau central (17) sur le sol est réglable au moyen des vérins (22 ; 22B ; 22C).

11. Semoir selon l'une quelconque des revendications 8 à 10, ***caractérisé par le fait que*** ledit (au moins un desdits) vérin(s) (22 ; 22B ; 22C) est(sont) lié(s) audit châssis avant (6) au moyen d'au moins une cinquième articulation (24 ; 24B ; 24C).

12. Semoir selon la revendication 11, ***caractérisé par le fait que*** ledit (au moins un desdits) vérin(s) (22) est un vérin double effet.

13. Semoir selon la revendication 11, ***caractérisé par le fait que*** ledit (au moins un desdits) vérin(s) (22C) est un vérin double constitué d'un corps (23C), d'un premier piston (30C) et d'un deuxième piston (35C).

14. Semoir selon la revendication 13, ***caractérisé par le fait que*** ledit premier piston (30C) et ledit corps (23C) constitue un premier vérin (28C), ledit premier vérin (28C) est un vérin double effet.

15. Semoir selon la revendication 13 ou 14, ***caractérisé par le fait que*** ledit deuxième piston (35C) et ledit corps (23C) constitue un deuxième vérin (32C).

16. Semoir selon la revendication 15, ***caractérisé par le fait que*** ledit deuxième vérin (32C) est associé à un accumulateur de pression (27C).

17. Semoir selon la revendication 15 ou 16, ***caractérisé par le fait que*** ledit deuxième vérin (32C) est lié audit bras (18).

18. Semoir selon l'une quelconque des revendications 13 à 17, ***caractérisé par le fait que*** lesdits deux vérins indépendants (28C, 32C) sont liés l'un à l'autre de façon rigide par ledit corps (23C), lesdits deux vérins indépendants (28C, 32C) forment ledit vérin double.

19. Semoir selon la revendication 11, ***caractérisé par le fait que*** ledit(au moins un desdits) vérin(s) (22B) est constitué par deux vérins indépendants (28B, 32B) liés l'un à l'autre au moyen d'une sixième articulation (33B).

20. Semoir selon la revendication 19, ***caractérisé par le fait que*** ladite sixième articulation (33B) est liée audit chariot porteur (12) au moyen d'une bielle (34B), ladite bielle (34B) est liée audit chariot porteur (12) au moyen d'une septième articulation (35B).

21. Semoir selon la revendication 19, ***caractérisé par le fait que*** ledit premier vérin indépendant (28B) est un vérin double effet.

22. Semoir selon la revendication 19, ***caractérisé par le fait que*** ledit deuxième vérin (32B) est associé à un accumulateur de pression (27C).

23. Semoir selon la revendication 22, ***caractérisé par le fait que*** ledit vérin deuxième (32B) est lié audit bras (18).

24. Semoir selon la revendication 6 ou 7, ***caractérisé par le fait qu**'*au moins un vérin (22A) est implanté entre ledit (au moins un desdits) bras (18) et ledit chariot porteur (12).

25. Semoir selon la revendication 24, ***caractérisé par le fait que*** ledit (au moins un desdits) vérin(s) (22A) est(sont) lié(s) audit chariot porteur (12) au moyen d'au moins une cinquième articulation (24A).

26. Semoir selon la revendication 24 ou 25, ***caractérisé par le fait que*** ledit (au moins un desdits) vérin(s) (22A) est(sont) lié(s) audit (à au moins un desdits) bras (18) au moyen d'au moins une quatrième articulation (26A).

27. Semoir selon l'une quelconque des revendications 25 à 26, ***caractérisé par le fait que*** la pression exercée par ledit rouleau central (17) sur le sol est réglable au moyen des vérins (22A).

28. Semoir selon l'une quelconque des revendications 24 à 27, ***caractérisé par le fait que*** ledit (au moins un desdits) vérin(s) (22A) est(sont) du type vérin à double effet.

29. Semoir selon la revendication 28, ***caractérisé par le fait que*** ledit (au moins un desdits) vérin(s) (22A) est(sont) associé(s) à un accumulateur de pression (27A).

## Claims

1. Seed drill (1; 1A; 1B; 1C) comprising:
- a coupling drawbar (3) intended to be connected to a tractor,
- a body (2) comprising
* a frame consisting:
• of a front frame (6) connected to the said coupling drawbar (3) and resting on the ground by means of wheels (10) that are connected to it by means of connection elements (11) so as to be able to be moved heightwise, and
• a rear frame (8) connected to the said front frame (6) by means of a central articulation (15) with an at least substantially vertical axis, the said rear frame (8) supporting at least one compaction roller (16),
and
* a sowing device (4) comprising, amongst other things, a hopper (5) and elements (7) for planting seeds in the ground, the said elements (7) for planting seeds in the ground being supported by the rear frame (8),
***characterized in* that** the said seed drill (1) also comprises a central roller (17) making it possible to accompany the said wheels (10) on the ground during manoeuvres.

2. Seed drill according to Claim 1, ***characterized in* that** the said central roller (17) supplements the said compaction roller(s).

3. Seed drill according to Claim 1 or 2, ***characterized in* that** the said central roller (17) is situated substantially behind the axis of rotation of the said wheels (10).

4. Seed drill according to any one of Claims 1 to 3, ***characterized in* that** the width of the said central roller (17) is substantially equal to the distance (e) between the tyres of the said wheels (10).

5. Seed drill according to any one of Claims 1 to 4, ***characterized in* that** the said central roller (17) is retracted from its working position by pivoting about at least one first articulation (21).

6. Seed drill according to any one of Claims 1 to 5, ***characterized in* that** the said central roller (17) is connected to a supporting carriage (12) by means of at least one arm (18) and that the said supporting carriage (12) is connected to the said front frame (6) by means of at least one second articulation (13).

7. Seed drill according to Claim 6, taken in combination with Claim 5, ***characterized in* that** the said (at least one of the said) arm(s) (18) is (are) connected on the one hand to the said central roller (17) by means of at least one third articulation (19) and on the other hand to the said supporting carriage (12) by means of the said (at least one of the said) first articulation(s) (21).

8. Seed drill according to Claim 6 or 7, ***characterized in* that** at least one cylinder (22; 22B; 22C) is arranged between the said (at least one of the said) arm(s) (18) and the said front frame (6).

9. Seed drill according to Claim 8, ***characterized in* that** the said (at least one of the said) cylinder(s) (22; 22B; 22C) is (are) connected to the said (at least one of the said) arm(s) (18) by means of at least one fourth articulation (26; 26B; 26C).

10. Seed drill according to Claim 8 or 9, ***characterized in* that** the pressure exerted by the said central roller (17) on the ground is adjustable by means of the cylinders (22; 22B; 22C).

11. Seed drill according to any one of Claims 8 to 10, ***characterized in* that** the said (at least one of the said) cylinder(s) (22; 22B; 22C) is (are) connected to the front frame (6) by means of at least one fifth articulation (24; 24B; 24C).

12. Seed drill according to Claim 11, ***characterized in* that** the said (at least one of the said) cylinder(s) (22) is a double-acting cylinder.

13. Seed drill according to Claim 11, ***characterized in* that** the said (at least one of the said) cylinder(s) (22C) is a double cylinder consisting of a body (23C), a first piston (30C), and a second piston (35C).

14. Seed drill according to Claim 13, ***characterized in* that** the said first piston (30C) and the said body (23C) form a first cylinder (28C), the said first cylinder (28C) is a double-acting cylinder.

15. Seed drill according to Claim 13 or 14, ***characterized in* that** the said second piston (35C) and the said body (23C) form a second cylinder (32C).

16. Seed drill according to Claim 15, ***characterized in* that** the said second cylinder (32C) is associated with a pressure accumulator (27C).

17. Seed drill according to Claim 15 or 16, ***characterized in* that** the said second cylinder (32C) is connected to the said arm (18).

18. Seed drill according to any one of Claims 13 to 17, ***characterized in* that** the said two independent cylinders (28C, 32C) are connected to one another in a rigid manner by the said body (23C), the said two independent cylinders (28C, 32C) form the said double cylinder.

19. Seed drill according to Claim 11, ***characterized in* that** the said (at least one of the said) cylinder(s) (22B) consists of two independent cylinders (28B, 32B) connected to one another by means of a sixth articulation (33B).

20. Seed drill according to Claim 19, ***characterized in* that** the said sixth articulation (33B) is connected to the said supporting carriage (12) by means of a connecting rod (34B), the said connecting rod (34B) is connected to the said supporting carriage (12) by means of a seventh articulation (35B).

21. Seed drill according to Claim 19, ***characterized in* that** the said first independent cylinder (28B) is a double-acting cylinder.

22. Seed drill according to Claim 19, ***characterized in* that** the said second cylinder (32B) is associated with a pressure accumulator (27C).

23. Seed drill according to Claim 22, ***characterized in* that** the said second cylinder (32B) is connected to the said arm (18).

24. Seed drill according to Claim 6 or 7, ***characterized in* that** at least one cylinder (22A) is arranged between the said (at least one of the said) arm(s) (18) and the said supporting carriage (12).

25. Seed drill according to Claim 24, ***characterized in* that** the said (at least one of the said) cylinder(s) (22A) is (are) connected to the said supporting carriage (12) by means of at least one fifth articulation (24A).

26. Seed drill according to Claim 24 or 25, ***characterized in* that** the said (at least one of the said) cylinder(s) (22A) is (are) connected to the said (to at least one of the said) arm(s) (18) by means of at least one fourth articulation (26A).

27. Seed drill according to any one of Claims 25 to 26, ***characterized in* that** the pressure exerted by the said central roller (17) on the ground is adjustable by means of the cylinders (22A).

28. Seed drill according to any one of Claims 24 to 27, ***characterized in* that** the said (at least one of the said) cylinder(s) (22A) is (are) of the double-acting cylinder type.

29. Seed drill according to Claim 28, ***characterized in* that** the said (at least one of the said) cylinder(s) (22A) is (are) associated with a pressure accumulator (27A).

## Patentansprüche

1. Sämaschine (1; 1A; 1B; 1C) mit :
- einer Anhängerdeichsel (3), die dazu bestimmt ist, mit einem Schlepper verbunden zu werden,
- einem Körper (2), der
* ein Gestell, bestehend aus:
• einem vorderen Gestell (6), das mit der Anhängerdeichsel (3) verbunden ist und sich am Boden mittels Rädern (10) abstützt, die mittels Verbindungselementen (11) damit verbunden sind, um in der Höhe verschoben werden zu können, und
• einem hinteren Gestell (8), das mit dem vorderen Gestell (6) mittels eines zentralen Gelenks (15) mit einer im Wesentlichen vertikalen Achse verbunden ist, wobei das hintere Gestell (8) mindestens eine Verdichtungswalze (16) trägt,
und
* eine Sävorrichtung (4), mit unter anderem einem Trichter (5) und Elemente zum Einbringen von Saat in den Boden (7), wobei die Elemente zum Einbringen von Saat in den Boden (7) von dem hinteren Gestell (8) getragen werden,
umfasst,
***dadurch gekennzeichnet,* dass** die Sämaschine (1) ferner eine zentrale Walze (17) umfasst, die es ermöglicht, die Räder (10) bei Manövern am Boden zu begleiten.

2. Sämaschine nach Anspruch 1, ***dadurch gekennzeichnet,* dass** die zentrale Walze (17) die Verdichtungswalze(n) ergänzt.

3. Sämaschine nach Anspruch 1 oder 2, ***dadurch gekennzeichnet,* dass** die zentrale Walze (17) im Wesentlichen hinter der Drehachse der Räder (10) angeordnet ist.

4. Sämaschine nach irgend einem der Ansprüche 1 bis 3, ***dadurch gekennzeichnet,* dass** die Breite der zentralen Walze (17) im Wesentlichen gleich dem Reifenabstand (e) der Räder (10) ist.

5. Sämaschine nach irgend einem der Ansprüche 1 bis 4, ***dadurch gekennzeichnet,* dass** die zentrale Walze (17) aus ihrer Arbeitsposition enthoben wird, wobei sie um mindestens ein erstes Gelenk (21) geschwenkt wird.

6. Sämaschine nach irgend einem der Ansprüche 1 bis 5, ***dadurch gekennzeichnet,* dass** die zentrale Walze (17) mit einem Tragwagen (12) mittels mindestens eines Arms (18) verbunden ist, und dass der Tragwagen (12) mit dem vorderen Gestell (6) mittels mindestens eines zweiten Gelenks (13) verbunden ist.

7. Sämaschine nach Anspruch 6 in Kombination mit Anspruch 5, ***dadurch gekennzeichnet,* dass** der (mindestens einer der) Arm(e) (18) einerseits mit der zentralen Walze (17) mittels mindestens eines dritten Gelenks (19) und andererseits mit dem Tragwagen (12) mittels des (mindestens eines der) ersten Gelenks(e) (21) verbunden ist (sind).

8. Sämaschine nach Anspruch 6 oder 7, ***dadurch gekennzeichnet,* dass** mindestens ein Zylinder (22; 22B; 22C) zwischen dem (mindestens einem der) Arm(e) (18) und dem vorderen Gestell (6) angeordnet ist.

9. Sämaschine nach Anspruch 8, ***dadurch gekennzeichnet,* dass** der (mindestens einer der) Zylinder (22; 22B; 22C) mit dem (mindestens einem der) Arm(e) (18) mittels mindestens einem vierten Gelenk (26; 26B; 26C) verbunden ist (sind).

10. Sämaschine nach Anspruch 8 oder 9, ***dadurch gekennzeichnet,* dass** der von der zentralen Walze (17) auf den Boden ausgeübte Druck mittels der Zylinder (22; 22B; 22C) einstellbar ist.

11. Sämaschine nach irgend einem der Ansprüche 8 bis 10, ***dadurch gekennzeichnet,* dass** der (mindestens einer der) Zylinder (22; 22B; 22C) mit dem vorderen Gestell (6) mittels mindestens einem fünften Gelenk (24; 24B; 24C) verbunden ist (sind).

12. Sämaschine nach Anspruch 11, ***dadurch gekennzeichnet,* dass** der (mindestens einer der) Zylinder (22) ein Zylinder mit Doppelwirkung ist.

13. Sämaschine nach Anspruch 11, ***dadurch gekennzeichnet,* dass** der (mindestens einer der) Zylinder (22C) ein Doppelzylinder ist, der von einem Körper (23C), einem ersten Kolben (30C) und einem zweiten Kolben (35C) gebildet ist.

14. Sämaschine nach Anspruch 13, ***dadurch gekennzeichnet,* dass** der erste Kolben (30C) und der Körper (23C) einen ersten Zylinder (28C) darstellen, wobei der erste Zylinder (28C) ein Zylinder mit Doppelwirkung ist.

15. Sämaschine nach Anspruch 13 oder 14, ***dadurch gekennzeichnet,* dass** der zweite Kolben (35C) und der Körper (23C) einen zweiten Zylinder (32C) bilden.

16. Sämaschine nach Anspruch 15, ***dadurch gekennzeichnet,* dass** der zweite Zylinder (32C) mit einem Druckspeicher (27C) verbunden ist.

17. Sämaschine nach Anspruch 15 oder 16, ***dadurch gekennzeichnet,* dass** der zweite Zylinder (32C) mit dem Arm (18) verbunden ist.

18. Sämaschine nach irgend einem der Ansprüche 13 bis 17, ***dadurch gekennzeichnet,* dass** die beiden unabhängigen Zylinder (28C, 32C) miteinander starr durch den Körper (23C) verbunden sind, wobei die beiden unabhängigen Zylinder (28C, 32C) den Doppelzylinder bilden.

19. Sämaschine nach Anspruch 11, ***dadurch gekennzeichnet,* dass** der (mindestens einer der) Zylinder (22B) von zwei unabhängigen Zylindern (28B, 32B) gebildet ist, die miteinander mittels eines sechsten Gelenks (33B) verbunden sind.

20. Sämaschine nach Anspruch 19, ***dadurch gekennzeichnet,* dass** das sechste Gelenk (33B) mit dem Tragwagen (12) mittels einer Stange (34B) verbunden ist, wobei die Stange (34B) mit dem Tragwagen (12) mittels eines siebten Gelenks (35B) verbunden ist.

21. Sämaschine nach Anspruch 19, ***dadurch gekennzeichnet,* dass** der erste unabhängige Zylinder (28B) ein Zylinder mit Doppelwirkung ist.

22. Sämaschine nach Anspruch 19, ***dadurch gekennzeichnet,* dass** der zweite Zylinder (32B) mit einem Druckspeicher (27C) verbunden ist.

23. Sämaschine nach Anspruch 22, ***dadurch gekennzeichnet,* dass** der zweite Zylinder (32B) mit dem Arm (18) verbunden ist.

24. Sämaschine nach Anspruch 6 oder 7, ***dadurch gekennzeichnet,* dass** mindestens ein Zylinder (22A) zwischen dem (mindestens einem der) Arm(e) (18) und dem Tragwagen (12) angeordnet ist.

25. Sämaschine nach Anspruch 24, ***dadurch gekennzeichnet,* dass** der (mindestens einer der) Zylinder (22A) mit dem Tragwagen (12) mittels mindestens eines fünften Gelenks (24A) verbunden ist (sind).

26. Sämaschine nach Anspruch 24 oder 25, ***dadurch gekennzeichnet,* dass** der (mindestens einer der) Zylinder (22A) mit dem (mindestens einem der) Arm(e) (18) mittels mindestens eines vierten Gelenks (26A) verbunden ist.

27. Sämaschine nach irgend einem der Ansprüche 25 bis 26, ***dadurch gekennzeichnet,* dass** der von der zentralen Walze (17) auf den Boden ausgeübten Druck mittels der Zylinder (22A) einstellbar ist.

28. Sämaschine nach irgend einem der Ansprüche 24 bis 27, ***dadurch gekennzeichnet,* dass** der (mindestens einer der) Zylinder (22A) vom Typ Zylinder mit Doppelwirkung ist (sind).

29. Sämaschine nach Anspruch 28, ***dadurch gekennzeichnet,* dass** der (mindestens einer der) Zylinder (22A) mit einem Druckspeicher (27A) verbunden ist (sind).
